# EUROPÄISCHE PATENTSCHRIFT

(11) **EP 0 585 845 B1**
(45) Veröffentlichungstag und Bekanntmachung des Hinweises auf die Patenterteilung: **08.07.1998**
(21) Anmeldenummer: 93113783.0
(22) Anmeldetag: 28.08.1993
(51) Int. Cl.: G05B 19/18, B23B 1/00

(54) **Abstechkontrolle bei Werkzeugmaschine mit zwei normalerweise synchron laufenden Spindeln**
Cutting-off control on machine tool with two normally synchronously rotating spindles
Contrôle de tronçonnage sur une machine outil à deux broches tournant normalement en synchronisme

(30) Priorität: 01.09.1992 DE 4229118
(43) Veröffentlichungstag der Anmeldung: 09.03.1994
(73) Patentinhaber: Dr. Johannes Heidenhain GmbH, 83301 Traunreut (DE)
(72) Erfinder: Schuldt, Peter, D-90748 Fürth (DE); Dicks, Günter, D-90748 Fürth (DE)

(56) Entgegenhaltungen:
- EP-A- 0 364 593
- EP-A- 0 422 651
- DE-A- 3 618 349
- PATENT ABSTRACTS OF JAPAN vol. 9 no. 14 (M-352) ,22.Januar 1985 & JP-A-59 161250 (CITIZEN TOKEI) 12.September 1984,

## Beschreibung

Die Erfindung betrifft ein Verfahren zur Kontrolle des Abstechvorgangs bei der spanenden Bearbeitung eines Werkstücks in einer Werkzeugmaschine, wie es im Oberbegriff des Patentanspruches 1 näher angegeben ist, sowie eine Werkzeugmaschine zur Ausführung des Verfahrens.

Es sind Drehmaschinen bekannt, die mit zwei einander zugewandten Werkstückspindeln ausgestattet sind. Die Spanneinrichtungen an diesen Werkstückspindeln können zum Bearbeiten oder zum Transport Werkstücke gleichzeitig an gegenüberliegenden Enden spannen. Ein Stangenende, das an der ersten Spindel der Werkzeugmaschine vorbearbeitet wird, wird anschließend in der Spanneinrichtung der gegenüberliegenden Werkstückspindel eingespannt, und das bearbeitete Stangenende wird von der Werkstoff-Stange abgetrennt. In der EP 422 651 A2 ist beschrieben, daß der Abstechvorgang bei einem solchen Werkstück und insbesondere die Trennung der mechanischen Verbindung der beiden Spindeln durch das Werkstück darauf überprüft wird, ob die Differenz der Drehzahl-Istwerte und/oder die Differenz der Drehwinkel-Istwerte einen bestimmten Grenzwert überschreitet. Liegt der Differenzwert über dem Grenzwert, so wird damit angezeigt, daß der Abstechvorgang abgeschlossen ist.

Wird das Werkstück bei der Bearbeitung oder beim Abstechvorgang an seinen beiden Enden von den beiden Spindeln gehalten, so bedingt das zwangsläufig den Antrieb beider Spindeln mit Synchrondrehzahl. In vielen Fällen muß das Werkstück wegen der Außenkontur oder wegen der nachfolgenden Bearbeitung in bestimmten Drehlagen ergriffen werden können. Dazu werden die Werkzeugspindeln nicht nur mit Synchrondrehzahl, sondern auch in bestimmter Phasenlage angetrieben, d.h. der Drehwinkel muß als weitere Steuergröße zur Verfügung stehen. Bevor ein Werkstück, das in der einen Spindel gehalten und dort bearbeitet wird, auch vom Futter der Gegenspindel ergriffen werden kann, müssen beide Spindeln synchron laufen. Bei der im Stand der Technik bekannten Werkzeugmaschine (EP 422 651 A2) sind daher besondere Maßnahmen getroffen, die einen exakten Synchronlauf beider Spindeln gewährleisten. Dazu ist notwendig, daß die beiden Drehzahl-Regelkreise frei und damit weitgehend unabhängig voneinander arbeiten können. Je perfekter die Regelkreise arbeiten, und je besser die Spindelsynchronisation ist, desto geringer fällt die Differenz der Drehzahl-Istwerte oder der Drehwinkel-Istwerte aus, um die sich die beiden Spindeln nach Durchtrennung des von ihnen gemeinsam gehaltenen Werkstücks unterscheiden. Eine Verbesserung der Spindelsynchronisation wirkt sich damit nachteilig auf das im Stand der Technik benutzte Verfahren zur Feststellung der Vollendung des Abstechvorgangs aus.

Dementsprechend ist Aufgabe der Erfindung, das bekannte Verfahren zur Feststellung der Trennung der mechanischen Verbindung der beiden Spindeln, insbesondere eines vollendeten Abstechvorgangs an dem zwischen den beiden Spindeln eingespannten Werkstück, so auszugestalten, daß sich nach Druchtrennung des Werkstücks und der damit verbundenen mechanischen Entkopplung der beiden Spindeln eine merkliche Drehzahl- oder Drehwinkeldifferenz zwischen beiden Spindeln einstellt, die weit über die Fehlertoleranz der Meßgeber hinausgeht.

Diese Aufgabe wird mit einem Verfahren nach dem Oberbegriff des Patentanspruches 1 gelöst, das erfindungsgemäß die in dessen Kennzeichenteil angegebenen Merkmale aufweist. Vorteilhafte Ausgestaltung des Verfahrens und eine Werkzeugmaschine zu dessen Durchführung sind in den Unteransprüchen angegeben

Die Druckschrift DE 36 18 349 A1 zeigt ein Verfahren zur Kontrolle des Abstechvorgangs, bei welchem sich die Lage oder die Drehzahl einer der zuvor synchron laufenden Spindeln durch Änderung der entsprechenden Sollwerte geringfügig ändert.

Gemäß der Erfindung wird die Regelung des Antriebes von einer der beiden Spindeln während des Abstechvorganges so verändert, daß sich zwischen den beiden, nach Durchtrennen des Werkstücks mechanisch entkoppelten Spindeln eine bleibende Regelabweichung einstellt. Diese Regelabweichung führt zu einer Differenz im Drehwinkel und/oder in der Drehzahl der beiden Spindeln, wobei diese Differenz so groß ausfällt, daß sie höher liegt als die Grenzwerte, die bei harten Materialien mit starken Torsionsschwingungen im Werkstück auftreten können. Vorzugsweise wird die Regelcharakteristik dadurch verändert, daß in dem PI-Regelkreis für den Spindelantrieb der I-Anteil stark herabgesetzt oder ganz weggenommen wird. Diese Maßnahme beruht auf der Überlegung, daß ein PI-Regler eine Parallelschaltung eines P- und eines I-Reglers ist und deren jeweiligen Vorteile miteinander verbindet. Ein P-Regler ist ein sehr schneller Regler; jede Änderung der Regelabweichung bewirkt eine sofortige proportionale Änderung der Stellgröße. Im Normalfall bleibt aber im stationären Zustand eine Abweichung zwischen Soll- und Istwert bestehen. Beim I-Regler ist die Stellgröße das Integral der Regelabweichung über die Zeit. Die Änderunggeschwindigkeit der Stellgröße ist abhängig von der Größe der Abweichung und der Integrationszeitkonstante des Reglers. Ein I-Regler ist daher langsamer als ein P-Regler, er ändert aber die Ausgangsstellgröße so lange, bis die Regeldifferenz Null ist. Wird gemäß der Erfindung gegen Ende des Abstechvorganges der PI-Regler zu einem P-Regler reduziert, so ist die Regelcharakteristik des P-Reglers maßgebend und es stellt sich damit eine bleibende Regelabweichung ein, so daß Drehzahl- oder Drehwinkeldifferenzen zwischen den Spindeln nicht mehr vollständig ausgeregelt werden. Nach Durchtrennung des Werkstücks driften die Drehzahlen der beiden Spindeln weiter auseinander als es aufgrund von Torsionsschwingungen beim Bearbeiten des Werkstücks möglich wäre.

Alternativ zur Veränderung bzw. zum Wegnehmen des I-Anteils kann auch vorgesehen werden, den I-Anteil des Reglers unverändert zu lassen und stattdessen den P-Anteil zu verändern. Weiter ist es auch möglich, sowohl den I- wie auch den P-Anteil im Regelkreis der einen Spindel gegenüber den entsprechenden Anteilen im Regelkreis der anderen Spindel zu verändern.

Im folgenden wird die Erfindung anhand des in den Figuren dargestellten Ausführungsbeispiels beschrieben und näher erläutert.

Es zeigen
- Figur 1:: Eine schematische Ansicht zweier Werkstückspindeln mit Spindelantrieb und NC-Steuereinheit.
- Figur 2:: Ein Blockschaltbild eines Spindel-Regelkreises und
- Figur 3:: In einer schematischen Darstellung ein Ausführungsbeispiel des PI-Reglers

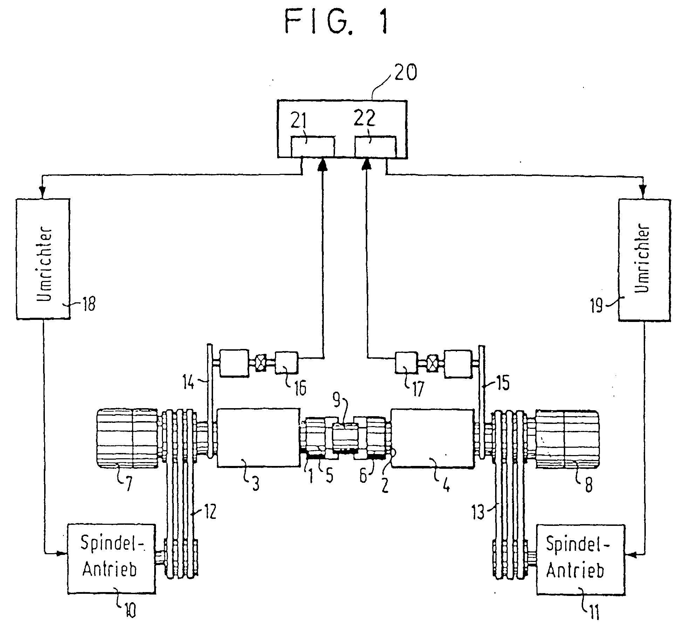

Die Figur 1 zeigt schematisch die Hauptspindel 1 und die Gegenspindel 2 einer Drehmaschine zusammen mit deren Antrieben der Steuereinheit.
Die Hauptspindel 1 und die Gegenspindel 2 sind in Spindelkästen 3 bzw. 4 gelagert, von denen mindestens einer in Spindelachsrichtung verschieblich ist. Die Gegenspindel 2 kann auch eine im Werkzeugträger der Drehmaschine gelagerte Hilfsspindel sein. An der Hauptspindel 1 und der Gegenspindel 2 sind je ein Spannfutter 5 bzw. 6 befestigt, die von Spannzylindern 7 bzw. 8 geöffnet und geschlossen werden können. In dem dargestellten Beispiel wird ein Werkstück 9 von den beiden Spannfuttern 5, 6 gehalten.

Die Hauptspindel 1 und die Gegenspindel 2 werden von je einem Spindelantrieb 10, 11 über Riementriebe 12, 13 rotierend angetrieben. Über je einen weiteren Zahnriemen 14, 15 sind die Werkstückspindeln mit Drehwinkelgebern 16, 17 verbunden, die die Drehlagen der Werkzeugspindeln 1, 2 an eine NC-Steuereinheit 20 melden. Die NC-Steuereinheit 20 enthält wesentliche Teile und insbesondere die PI-Regler 21, 22 von zwei Drehzahl-Regelkreisen, von denen jeder zur Drehzahl-Regelung von einem der beiden Spindelantriebe 10, 11 dient. Dabei kann jeder der Drehzahlregelkreise einen Umrichter 18, 19 enthalten, der selbst einen untergeordneten Drehmomenten Regelkreis bildet.

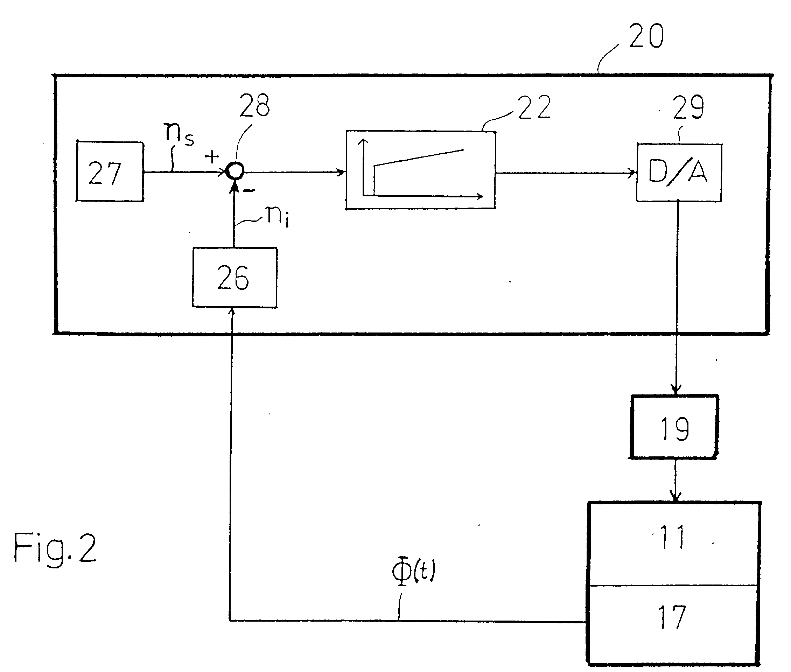

Figur 2 zeigt schematisch den Regelkreis für den Spindelantrieb 11 von einer der beiden Spindeln; in dem dargestellten Ausführungsbeispiel sind zur Bezeichnung der einzelnen Komponenten die Bezugszeichen aus dem Regelkreis der Gegenspin del 2 verwendet.
Das Ausgangssignal des Drehwinkel-Gebers 17 wird der NC-Steuerung 20 zugeführt. In ihr befindet sich ein Drehzahl-Regelkreis mit einem Differenzierglied 26, in dem das Winkelsignal Φ des Drehwinkel-Gebers 17 differenziert und in das Drehzahlsignal n umgewandelt wird. Das Drehzahl-Istwertsignal nᵢ wird dem Minus-Eingang eines Addierers 28 zugeführt. Dem positiven Eingang dieses Addierers wird das von einem Sollwert-Geber 27 erzeugte Drehzahl-Sollwertsignal nₛ zugeführt, und das am Ausgang des Addierers 28 anliegende Differenzsignal wird an den Eingang des PI-Reglers 22 gelegt. Das Ausgangssignal des PI-Reglers 22 wird gegebenenfalls an einem D/A-Wandler umgeformt und dann über den Umrichter 19 dem Spindelantrieb 11 als Stellsignal zugeführt.

Wenn die Steuerung auch mit dem Drehwinkel Φ selbst erfolgen soll, so ist die Schaltung analog aufgebaut, es fehlt in diesem Fall nur das Differenzierglied 26 und der Sollwert-Geber 27 liefert dann kein Drehzahl-, sondern ein Drehwinkelsignal.

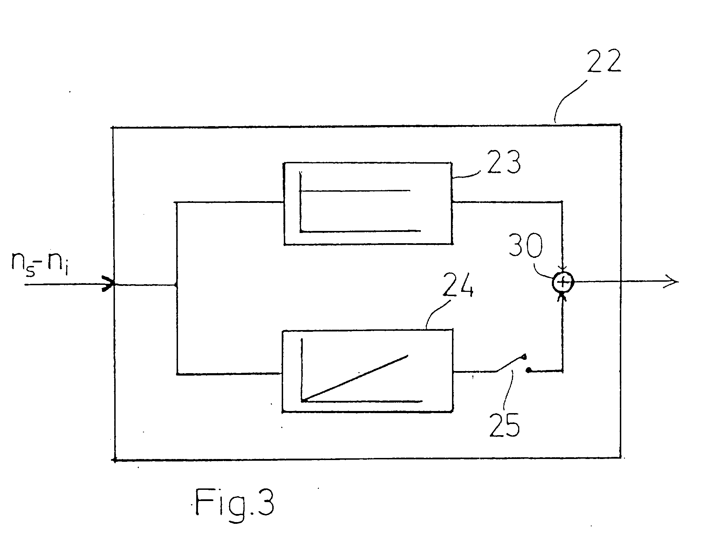

Figur 3 zeigt schematisch den inneren Aufbau eines PI-Reglers 22 der für das erfindungsgemäße Verfahren verwendet werden kann. Dem PI-Regler wird das Differenzsignal nₛ - nᵢ zugeführt. Das Signal wird zu dem P-Regler 23 und dem I-Regler 24 verzweigt. Die Ausgänge des P-Reglers und des I-Reglers werden in dem Addierer 30 zusammengeführt. Gemäß der Erfindung ist in dem Kreis des I-Reglers 24 ein Unterbrechnungsschalter 25 vorgesehen, der gegen Ende des Abstechvorganges geöffnet wird. Dadurch erhält der für die Gegenspindel 2 vorgesehene PI-Regler 22 eine andere Regelcharakteristik als der PI-Regler 21 für die Hauptspindel 1.

Alternativ kann vorgesehen sein, daß mit dem Schalter 25 nicht der Teilkreis des I-Reglers 24 unterbrochen wird, sondern stattdessen mit einem Schalter die Integrations-Kapazität im Rückkopplungskreis des I-Reglers überbrückt wird.

Weiterhin ist es möglich, nicht den I-Regler zu verändern, sondern stattdessen das Regel-Verhalten des P-Reglers 23 zu verändern. Dies kann zum Beispiel dadurch geschehen, daß gegen Ende des Abstechvorgangs der Rückkopplungswiderstand oder der Eingangswiderstand des P-Reglers verändert wird, was beispielsweise durch Parallelschalten weiterer Widerstände oder durch Einfügen eines weiteren Widerstands in den Eingangs- oder den Rückkopplungskreis geschehen kann. Bei der bevorzugten Ausführungsform wird die Änderung des PI-Reglers durch Veränderung des I-Reglers vorgenommen, weil das Regel-Verhalten eines P-Reglers so ist, daß im stationären Zustand stets eine Abweichung zwischen Soll- und Istwert gegeben ist.

## Patentansprüche

1. Verfahren zur Kontrolle des Abstechvorgangs bei der spanenden Bearbeitung eines Werkstücks (9) in einer Werkzeugmaschine, bei dem das Werkstück zwischen einer Hauptspindel (1) und einer Gegenspindel (2) einspannbar ist, wobei die beiden Spindeln separat und drehzahlgeregelt angetrieben werden und ihre Drehzahl jeweils mit voneinander unabhängigen PI-Regelkreisen (21, 22) geregelt werden, und wobei zwecks Feststellung der Trennung der mechanischen Verbindung der beiden Spindeln (1, 2), insbesondere eines vollendeten Abstechvorganges an dem zwischen beiden Spindeln eingespannten Werkstück (9), geprüft wird, ob die Differenz der Drehzahl-Istwerte (n₂-n₁) ) und/oder die Differenz der Drehwinkel-Istwerte (Φ₂-Φ₁) einen bestimmten Grenzwert überschreitet,
**dadurch gekennzeichnet, daß**
gegen Ende des Abstechvorgangs die Regelcharakteristik eines der beiden PI-Regelkreise (21, 22) so verändert wird, daß sich eine bleibende Regelabweichung zwischen den beiden Regelkreisen einstellt.

2. Verfahren nach Anspruch 1,
**dadurch gekennzeichnet, daß**
die Charakteristik eines der PI-Regelkreise (21,22) verändert wird, indem der Integrations-Anteil stark herabgesetzt wird.

3. Verfahren nach Anspruch 1 oder 2
**dadurch gekennzeichnet, daß**
die Charakteristik des PI-Regelkreises (22) der Hilfsspindel (2) verändert wird.

4. Werkzeugmaschine zum spanenden Bearbeiten eines zwischen zwei Spindeln (1, 2), einspannbaren Werkstück (9) und zur Ausführung des Verfahrens nach einem der Ansprüche 1 bis 3, mit einem separaten Antrieb (10, 11) für jede der beiden Spindeln (1, 2) wobei jedem Antrieb (10, 11) ein separater PI-Regelkreis (21, 22) mit einer Meßeinrichtung (16, 17) für die Drehzahl n und/oder den Drehwinkel φ zugeordnet ist und mit einer Auswerteeinrichtung zur Ermittlung der Differenz der Drehzahl-lstwerte (n₂-n₁) und/oder der Drehwinkel-lstwerte (φ₂-φ₁) und für den Vergleich mit einem Grenzwert, dadurch gekennzeichnet, daß einer der Pl-Regelkreise (21, 22) mit einer Einrichtung (25) zum Herabsetzen des I-Anteils der Stellgröße versehen ist, durch die eine bleibende Regelabweichung zwischen den beiden Regelkreisen (21, 22) herbeigeführt werden kann.

5. Werkzeugmaschine nach Anspruch 4,
**dadurch gekennzeichnet, daß**
die Einrichtung (25) bei dem PI-Regelkreis (22) für die Regelung des Gegenspindel-Antriebes (11) vorgesehen ist.

6. Werkzeugmaschine nach Anspruch 4 oder 5,
**dadurch gekennzeichnet, daß**
die Einrichtung (25) ein Schalter ist, mit dem der I-Signalzweig (24) des PI-Reglers (22) unterbrechbar ist.

## Claims

1. A method of controlling the parting operation in chip removing machining of a workpiece (9) in a machine tool, in which the workpiece can be clamped between a main spindle (1) and a counter-spindle (2), wherein the two spindles are driven separately and with controlled speed of rotation and their speeds of rotation are controlled by respective proportional-integral control circuits (21, 22) independent of one another, and wherein a check is made, in order to determine the separation of the mechanical connection of the two spindles (1, 2), especially a completed parting operation of the workpiece (9) clamped between the two spindles, whether the difference between the speed of rotation actual values (n₂-n₁) and/or the difference between the angle of rotation actual values (φ₂-φ₁) exceeds a predetermined limit value, characterized in that towards the end of the parting operation the control characteristic of one of the two proportional-integral control circuits (21, 22) is so altered that a persistent control deviation between the two control circuits is established.

2. A method according to claim 1, characterized in that the characteristic of one of the proportional-integral control circuits (21, 22) is altered in that the integral component is strongly reduced.

3. A method according to claim 1 or 2, characterized in that the characteristic of the proportional-integral control circuit (22) of the auxiliary spindle (2) is altered.

4. A machine tool for chip removing machining of a workpiece (9) which can be clamped between two spindles (1, 2) and for carrying out the method according to any of claims 1 to 3, with a separate drive (10, 11) for each of the two spindles (1, 2), wherein a separate proportional-integral control circuit (21, 22) with a measuring device (16, 17) for the speed of rotation n and/or the angle of rotation φ is associated with each drive (10, 11) and with a processing device for determining the difference between the speed of rotation actual values (n₂-n₁) and/or the angle of rotation actual values (φ₂-φ₁) and for comparison with a limit value, characterized in that one of the proportional-integral control circuits (21, 22) is provided with a device (25) for reducing the integral component of the control variable, through which a persistent control deviation between the two control circuits (21, 22) can be effected.

5. A machine tool according to claim 4, characterized in that the device (25) is provided in the proportional-integral control circuit (22) for controlling the counter-spindle drive (11).

6. A machine tool according to claim 4 or 5, characterized in that the device (25) is a switch, with which the integral signal branch (24) of the proportional-integral controller (22) can be interrupted.

## Revendications

1. Procédé de contrôle de l'opération de tronçonnage lors de l'usinage d'une pièce (9) sur une machine-outil, la pièce étant montée entre une broche principale (1) et une contre-broche (2), et les deux broches étant entraînées séparément et avec régulation de la vitesse de rotation, procédé suivant lequel on régule les vitesses de rotation des deux broches respectivement à l'aide de circuits de régulation PI (21, 22) indépendants l'un de l'autre, et suivant lequel, pour détecter la suppression de la liaison mécanique entre les deux broches (1, 2), en particulier l'achèvement de l'opération de tronçonnage sur la pièce (9) montée entre les deux broches, on vérifie si la différence des valeurs réelles des vitesses (n2-n1) et/ou la différence des valeurs réelles des angles de rotation (φ2-φ1) dépasse une valeur limite déterminée, caractérisé par le fait que vers la fin de l'opération de tronçonnage on modifie la caractéristique de régulation de l'un des deux circuits de régulation PI (21, 22) de manière que s'établisse un écart de réglage permanent entre les deux circuits de régulation.

2. Procédé suivant la revendication 1, caractérisé par le fait qu'on modifie la caractéristique de l'un des circuits de régulation PI (21, 22) en réduisant fortement l'action intégrale.

3. Procédé suivant la revendication 1 ou 2, caractérisé par le fait qu'on modifie la caractéristique du circuit de régulation PI (22) de la contre-broche (2).

4. Machine-outil pour l'usinage d'une pièce (9) montée entre entre deux broches (1, 2), et pour la mise en oeuvre du procédé suivant l'une des revendications 1 à 3, comprenant un système d'entraînement séparé (10, 11) pour chacune des deux broches (1, 2), chaque système d'entraînement (10, 11) comprenant un circuit de régulation PI (21, 22) séparé avec un dispositif de mesure (16, 17) pour la vitesse de rotation n et/ou l'angle de rotation φ et un dispositif d'exploitation pour déterminer la différence des valeurs réelles de vitesses (n2-n1) et/ou des valeurs réelles d'angles de rotation (φ2-φ1) et pour la comparaison avec une valeur limite, caractérisée par le fait que l'un des circuits de régulation PI (21, 22) comporte un dispositif (25) pour réduire l'action I de la grandeur réglante, pour produire un écart de réglage permanent entre les deux circuits de régulation (21, 22).

5. Machine-outil suivant la revendication 4, caractérisée par le fait que le dispositif (25) est prévu sur le circuit de régulation PI (22) pour la régulation du système d'entraînement (11) de la contre-broche.

6. Machine-outil suivant la revendication 4 ou 5, caractérisée par le fait que le dispositif (25) est un interrupteur à l'aide duquel la branche des signaux I (24) du régulateur PI (22) peut être interrompue.
